(19) Europäisches Patentamt
European Patent Office
Office européen des brevets

(11) Publication number: **0 150 883**
**B1**

(12) **EUROPEAN PATENT SPECIFICATION**

(45) Date of publication of patent specification: **19.04.89**

(51) Int. Cl.$^4$: **C 07 F 9/24**, C 07 F 9/65

(21) Application number: **85200080.1**

(22) Date of filing: **25.01.85**

(54) **Process for preparing N-(dibenzyloxyphosphoryl)-cyanamide and processes using said compounds as intermediate for the synthesis of phosphagen substances.**

(30) Priority: **02.02.84 IT 1942684**

(43) Date of publication of application:
**07.08.85 Bulletin 85/32**

(45) Publication of the grant of the patent:
**19.04.89 Bulletin 89/16**

(84) Designated Contracting States:
**AT BE CH DE FR GB IT LI LU NL SE**

(56) References cited:
**CH-A- 395 110**
**DE-A-1 905 362**

**Houben-Weyl "Methoden der organischen Chemie", vol. XII/2, pp. 256,287-293, 507 and 547**

(73) Proprietor: **F.I.S. FABBRICA ITALIANA SINTETICI S.p.A.**
**Via Milano 26**
**I-36041 Alte di Montecchio Maggiore (IT)**

(72) Inventor: **Guerrato, Alfredo**
**Via Panisacco 4**
**I-36070 Trissino, Vicenza (IT)**
Inventor: **Rizzi, Amleto**
**Via Calesella 65**
**I-36041 Alti di Montecchio Maggiore**
**Vicenza (IT)**

(74) Representative: **Appoloni, Romano et al**
**ING. BARZANO' & ZANARDO MILANO S.p.A.**
**Via Borgonuovo 10**
**I-20121 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 150 883 B1

**Description**

It is well known that phosphocreatine is a compound of fundamental importance in the mechanism of muscular contraction in vertebrates. It is indeed a phosphagen substance: it is namely a stock of high-energy phosphoric groups. As such, it is prevailingly present in muscular tissue, wherein it is capable of promptly transforming ADP into ATP, in a reaction catalyzed by creatine kinase. Similarly interesting are compounds such as N-phosphoryl-creatinol, phosphoarginine and other molecules of similar structure.

Several industrial syntheses are known of these compounds, which proceed through the preparation of an intermediate, N-(dibenzyloxyphosphoryl)-cyanamide, from which e.g. N-(dibenzyloxyphosphoryl)-creatinine of formula (I) can be obtained, from which then phosphocreatine (II) can be obtained via the following reaction scheme A:

A)

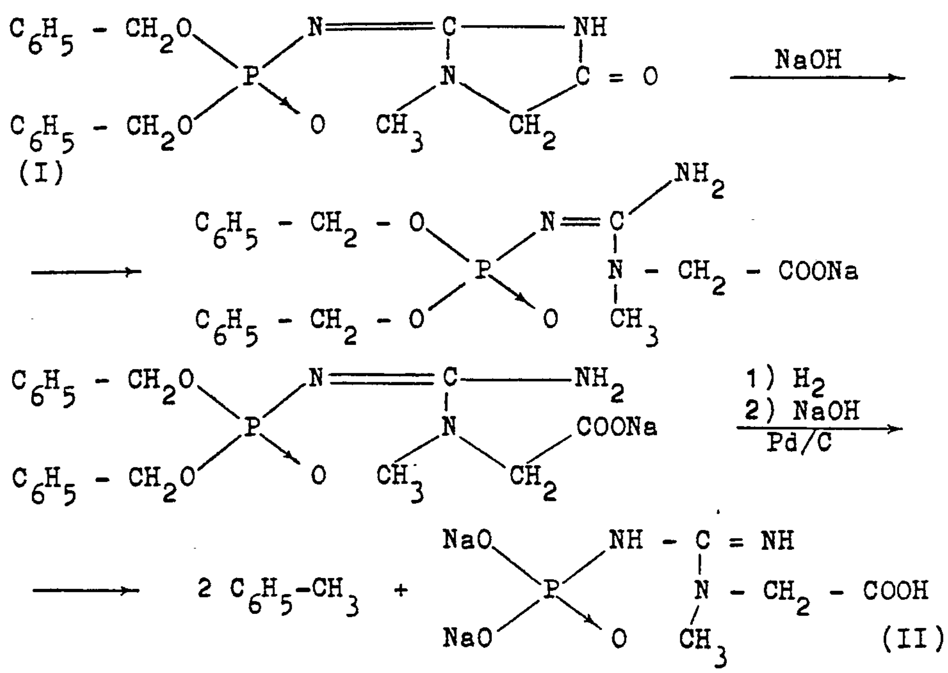


(I)

(II)

and phosphocreatinine (III) via the following reaction scheme B:

B)

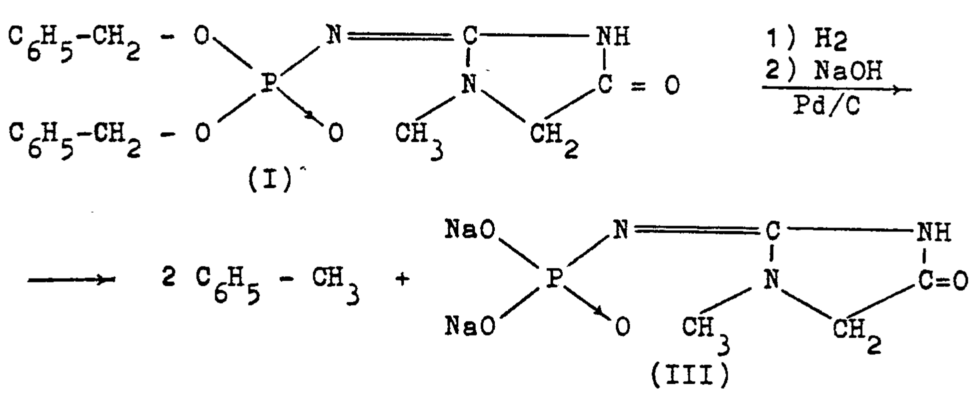


(I)

(III)

The preparation of the intermediate N-(dibenzyloxyphosphoryl)-creatinine (I) is presently carried out mostly by means of the synthesis which is summarized by the reaction scheme C shown hereunder:

C) Preparation according to known methods of an intermediate, dibenzyloxyphosphoryl chloride (IV); then reaction of this latter according to the following steps:

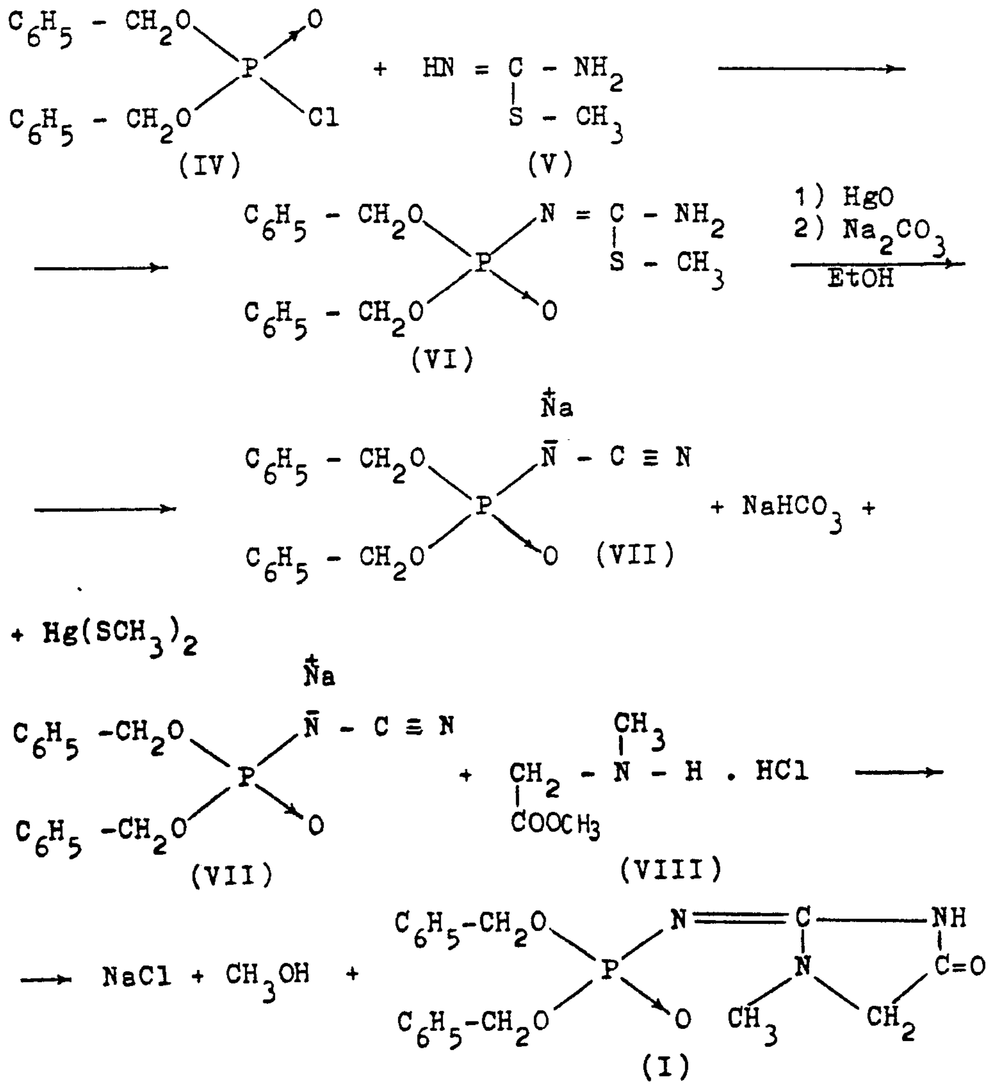


In other terms, according to the presently known reaction summarized in scheme C, the intermediate (IV) is reacted with S-methylisothiourea (V), and then the so-obtained corresponding N-dibenzyloxyphosphoryl)-derivative (VI) is cleaved by means of mercury oxide and sodium carbonate, sodium N-(dibenzyloxyphosphoryl)-cyanamide (VII) being obtained, which is separated from mercury mercaptide, poorly soluble, by filtering. The subsequent reaction of (VII) with sarcosine methylester hydrochloride (VIII) supplies then the derivative (I).

The synthesis of scheme C suffers from several drawbacks: one of such drawbacks is due to the circumstance that in the synthesis toxic, and hence of dangerous handling and environmental polluting reactants and products are involved; we refer in particular to the use of mercury oxide and of S-methylisothiourea, and to the mercaptan and to the mercury mercaptide produced in the synthesis.

As regards said prior art, the following reference can be cited herein: Swiss Patent No. 395.110.

It is clear that it would be very desirable to be able to avoid the use, or the formation, in the reaction ambient of so much toxic compounds, and this is precisely a purpose of the present invention.

A second problem of the known synthesis hereinabove recalled is connected with the low overall yield of the reaction, with consequent high incidence on the coast of the process of some reactants, in the first place of N-(dibenzyloxyphosphoryl)-S-methylisothiourea, whose presence therefore, also due to this latter reason, it would be desirable to avoid.

A further drawback of the preparation technology of the known art heretofore discussed consists in that N-(dibenzyloxyphosphoryl)-creatinine so produced is polluted by impurities (mainly by mercury and mercaptan) hindering the subsequent hydrogenolytic reaction, in that they poison the catalyst. Such a phenomenon makes it necessary to perform repeated recristallizations of the intermediate which, in addition to increasing the overall cost of the process, lower still more the yields.

Purpose of the present invention is therefore also to solve the further problems of the known art just mentioned, by providing a substantially original new synthesis, cheaper and characterized by higher yields. To the purpose of achieving the purposes mentioned, the present invention provides a process for

preparing substituted or unsubstituted N-(dibenzyloxyphosphoryl)-cyanamide, useful as intermediate in the synthesis of phosphagen compounds such as phosphocreatine, phosphocreatinine and similar compounds, characterized in that the corresponding dibenzyloxyphosphoryl chloride is reacted with cyanamide, dibenzyloxyphosphoryl-cyanamide being produced.

This latter can be then reacted with a compound bearing a primary or secondary amino function, to give a guanidine derivative. For instance, by reaction with a derivative of sarcosine, the corresponding derivative of N-(dibenzyloxyphosphoryl)-creatine or -creatinine can be obtained.

Houben-Weyl Methoden der Organischen Chemie, Vol. XII-2, pages 507 and 256 indicate that cyanamide would not be expected to undergo reaction as in the present invention.

DE—A—1 905 362 describes a reaction of sodium cyanamide with diethoxyphosphoryl chloride.

The invention consists therefore essentially in providing a step of direct synthesis of N-(dibenzyloxyphosphoryl)-cyanamide from dibenzyloxyphosphoryl chloride (it being possible to obtain this latter by any one of several known methods) and cyanamide: the fact that such a reaction gives favourable results may be defined as a surprising and unexpected aspect of the invention, in that such a reaction, never described before, takes place in heterogeneous phase, as dibenzyloxyphosphoryl chloride is soluble in organic solvents, and sodium cyanamide is only soluble in water or in polar solvents. It is moreover known that cyanamide has a strong inclination to instability, and, in alkaline medium, it easily forms a dimer, so that from the reaction step under discussion, the formation would be expected not of dibenzyloxyphosphoryl-cyanamide, but on the contrary of N-(dibenzyloxyphosphoryl)-N′-cyanoguanidine.

According to the invention, it is a critical condition for such a step of direct synthesis to succeed, that the reaction temperature be maintained under +5°C, and that an adequate stirring be provided.

The synthesis process according to the invention takes place advantageously within the same reaction ambient, it being not necessary that intermediates be isolated.

To the purpose of better understanding characteristics and advantages of the invention, in following Example 1, a summarizing but not limitative scheme is reported, followed by a description of the reactions therein shown.

Example 1

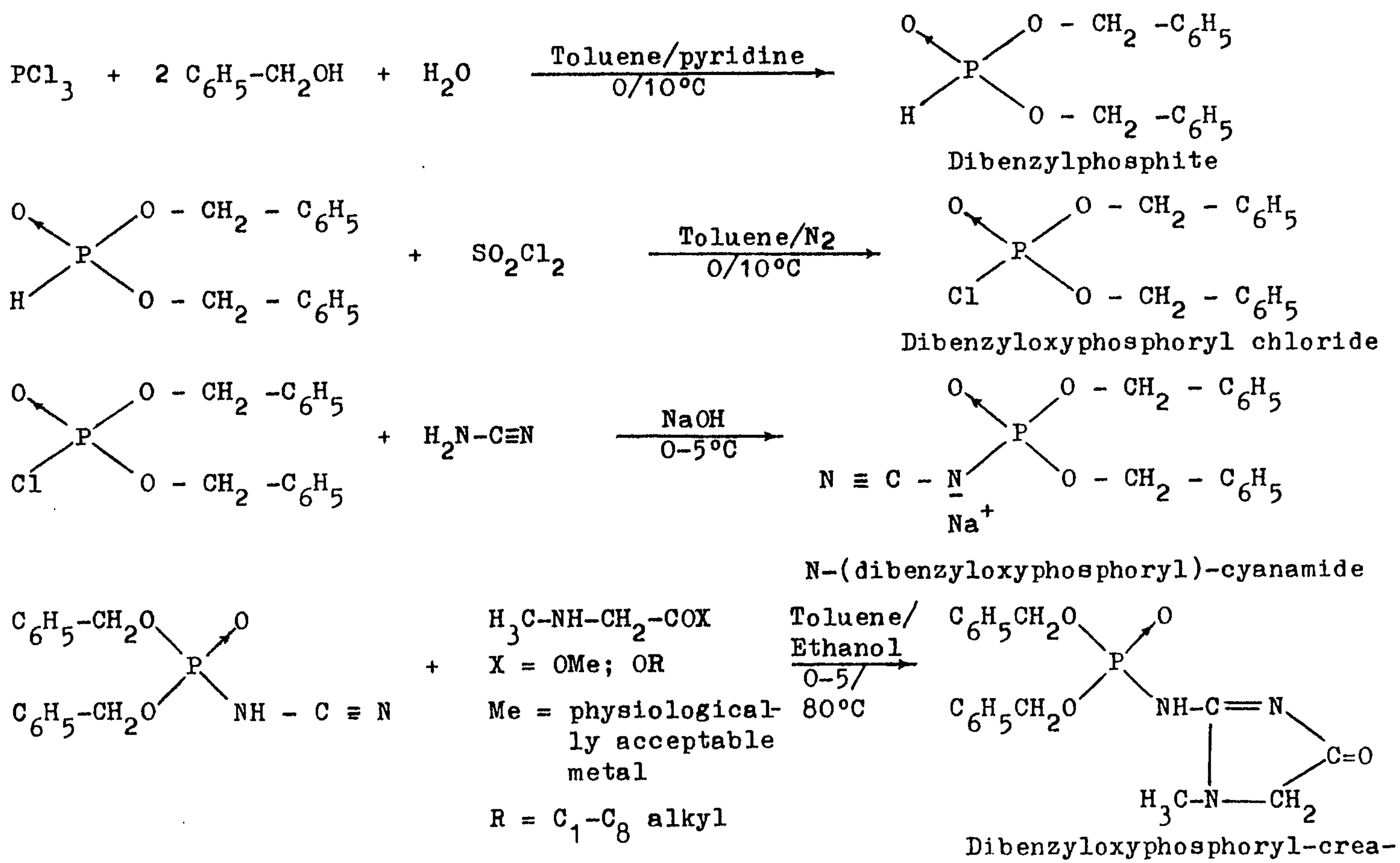


Dibenzylphosphite

Dibenzyloxyphosphoryl chloride

N-(dibenzyloxyphosphoryl)-cyanamide

Dibenzyloxyphosphoryl-creatinine

Example 1

N-(dibenzyloxyphosphoryl)-cyanamide

Into a glass equipment, of suitable volume, 250 ml of toluene and 106.76 g of phosphorus trichloride are added. The reaction mass is cooled, and at the temperature of 8—10°C, a mixture is added of 165 g of benzyl alcohol and 130.5 ml of pyridine in 250 ml of toluene. The reaction mass is maintained at 8—10°C for 30 minutes, and is then cautiously treated with 200 ml of water. The temperature is then allowed to rise to 20°C, the mass is stirred for 30 minutes, and the aqueous phase is separated. Such phase is extracted with 100 ml of toluene. The combined toluenic phases are concentrated to a small volume in vacuo. To this solution, cooled at 10°C and kept under a nitrogen atmosphere, a solution is slowly added of 80 ml of sulphuryl chloride in 280 ml of toluene, the mass is then stirred for 1 hour at 10°C, under a flow of nitrogen. The reaction mass is cooled, and to it concentrated NaOH (density 1.33) is slowly added, under strong stirring, until pH 5 is reached in the aqueous phase. To the reaction mass, 40 g of cyanamide and 140 ml of a NaOH solution at d = 1.33 are added. The reaction is allowed to proceed for 1 hour and 30 minutes at 0°C. Sodium N-(dibenzyloxyphosphoryl)-cyanamide is so obtained, dissolved in the aqueous phase.

Example 2

Crude dibenzyloxyphosphoryl-creatinine

To the reaction mass outcoming from a process as described in Example 1, 95 g of sarcosine methylesther hydrochloride dissolved in 270 ml of ethanol are added. pH is adjusted at 6 with acetic acid, and the mass is refluxed for 5 hours. The solvents are distilled off under vacuum, until an oily residue is obtained, which is mixed with 600 ml of water. The aqueous mixture is cooled and filtered. About 200 of white-grey precipitate are obtained, of crude and moist N-dibenzyloxyphosphoryl-creatinine.

Example 3

Pure dibenzyloxyphosphoryl-creatinine

The preceding product, still wetted with water, is dissolved upon warming in 360 ml of isopropanol. The reaction mass is filtered with activated charcoal, and the filtrate is cooled. The product crystallizes, which is filtered and dried. Are obtained 128 g of white, crystalline N-(dibenzyloxyphosphoryl)-creatinine, melting point 91—94°C.

Assay value with $HClO_4$ of 100.2%.

Moisture (K.F.) of 0.2%.

Example 4

N-di-(p-chlorobenzyloxy)-phosphoryl-cyanamide

Into a glass equipment, of adequate volume, 50 ml of toluene and 21.32 g of phosphorus trichloride are introduced. The reaction mass is cooled, and while keeping it at the temperature of 8—10°C, a mixture is added of 43.6 g of p-chlorobenzyl alcohol and 39.33 g of 5-ethyl-2-methylpyridine in 70 ml of toluene.

When the admixture is ended, the mass is further stirred for 30 minutes at 10—15°C, it is then cautiously treated with 40 ml of $H_2O$, and the reaction is allowed to proceed for 30 minutes at room temperature.

The phases are separated; the organic phase is concentrated, until an oily residue is obtained. This residue is diluted with 50 ml of toluene, and is then treated with 16 g of sulphuryl chloride diluted with 55 ml of toluene, under a nitrogen blanket. The reaction is allowed to proceed for 1 hour, always under a nitrogen flow, and the reaction mass is then cooled. A toluenic solution is thus obtained of di-(p-chlorobenzyloxy)-phosphoryl chloride. To the preceding reaction mass, cooled to 0°C, 35 ml of NaOH solution (density 1.33) are added, up to pH 5—6. 8 Grams of $NH_2CN$ are then added, and subsequently another 30 ml are added of NaOH solution (d = 1.33). The mass is further stirred for 1 hour and 30 minutes. An aqueous solution is so obtained of sodium N-(di-p-chlorobenzyloxyphosphoryl)-cyanamide, which does not require to be isolated.

Example 5

N-(di-p-chlorobenzyloxyphosphoryl)-creatinine:

To the reaction mass, outcoming from a process as described in Example 4, 126 g are added of a 38.9% solution of sarcosine methylester hydrochloride in ethyl alcohol. The reaction mass is refluxed for 5 hours. The solvents are distilled off in vacuo, until an oily residue is obtained, which is mixed with methanol. Some entrapped salts are filtered off upon warming.

By cooling of the filtrate, the product crystallizes. It is separated by filtration, and dried. An amount of 14 g of N-(di-p-chlorobenzyloxyphosphoryl)-creatinine is obtained.

Example 6

N-Phosphocreatinol

To a solution of sodium N-(dibenzyloxyphosphoryl)-cyanamide, prepared as described in Example 1, 80 g of 2-methylamino-ethanol are added, and the reaction mass is buffered at pH 5—6 with 73 ml of acetic acid. The reaction mass is stirred for 10 minutes, and its pH is checked adjusting it with another 15 ml of $CH_3—COOH$ to remain at pH 6. The mass is heated to reflux temperature, and is refluxed for 1 hour, and is

then cooled. The reaction mass is extracted with water made acid with $CH_3$—COOH, to extract the excess of 2-methylaminoethanol. The toluenic phase is collected, is concentrated to a small volume, and is diluted with 400 ml of methanol. An amount of 30 g of aniline is added thereto. The obtained solution is submitted to hydrogenolysis in an autoclave, using 1 g of 10% Pd on C. The hydrogenolysis is carried out at room temperature, and under a 4 atm pressure. When the absorption of hydrogen ceases, the mass is discharged and filtered. The precipitate is constituted by the product, by the catalyst and by salts. The precipitate is suspended in 100 ml of cold water, is stirred for 5 minutes, and is filtered. The filtrate, treated with 400 ml of acetone, allows 25 g of N-phosphocreatinol to separate.

With reference to heretofore reported Examples, many different embodiments can be provided, without thereby departing from the invention as claimed. In particular, syntheses different to those exemplified, of dibenzyl phosphite and of dibenzyloxyphosphoryl chloride, may be suitably selected by one skilled in the art among all those described in the technical literature. Also different conditions to those shown in the Examples may be used in the end steps in the synthesis of the intermediate N-(dibenzyloxyphosphoryl)-creatinine provided that the claimed synthesis step of N-(dibenzyloxyphosphoryl)-cyanamide is used. A first advantage of the invention is clear, i.e., the avoiding of the use of toxic reactants, such as S-methylisothiourea and mercury oxide, and hence of the consequent risks of toxicity in the working ambient, and of pollution and environmental damaging. The danger is also avoided of poisoning of the catalyst by toxic reactants or reaction products in the end synthesis step of phosphocreatine and of phosphocreatinine, and of obtaining an impure product, and hence requiring purification. For understanding how the invention also achieves the purpose of providing a synthesis process financially more advantageous than the known art cited in the introduction to the disclosure, it is useful to take into account the high overall yields of N-(dibenzyloxyphosphoryl)-guanidino-derivative obtainable in that way; the working simplicity, which does not require that any intermediate preceding the N-(dibenzyloxyphosphoryl)-guanidino-derivative be isolated; the purity of the product, obtained by means of a simple crystallization, not requiring any further purification steps, nor poisoning possible hydrogenation catalysts used in the hydrogenolysis of benzyl groups, giving high yields of de-benzylated product.

An object of the present invention is also the preparation from the intermediate produced, as described hereinabove, of phosphagen compounds of general formula (IX)

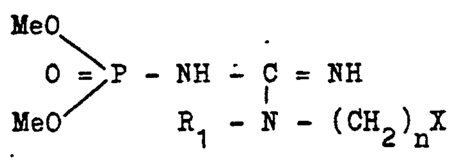 (IX)

wherein:

| $R_1$ | n | X | Resulting compound |
|---|---|---|---|
| $CH_3$ | 1 | —COOH | Phosphoryl-creatine |
| H | 3 | —CH($NH_2$)COOH | Phosphoryl-arginine |
| H | 2 | —$SO_3$H | Phosphoryl-taurocyamine |
| H | 1 | —COOH | Phosphoryl-glycocyamine |
| H | 2 | —OPO(OH)$OCH_2$CH($NH_2$)COOH | Phosphoryl-lombricine |
| $CH_3$ | 2 | —OH | Phosphoryl-creatinol |

and Me = H or a metal forming a physiologically acceptable salt and the products of intramolecular condensation between the group X and the group =NH of the compounds of formula (IX), such as e.g. phosphoryl-creatinine sodium salt.

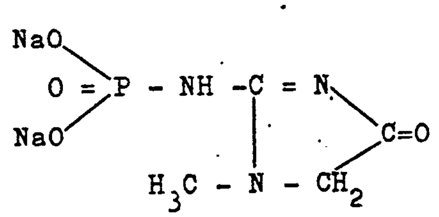

For the synthesis of such compounds of formula (IX), and of their condensation derivatives, starting from the intermediate N-(dibenzyloxyphosphoryl)-cyanamide prepared according to the invention,

reference is made to the known techniques described in technical literature.

**Claims**

1. Process for the preparation of a substituted or unsubstituted N-(dibenzyloxyphosphoryl)-cyanamide, useful as intermediate in the synthesis of phosphagen compounds such as phosphocreatine, phosphocreatinine and similar compounds, characterized in that the corresponding dibenzyloxyphosphoryl chloride is reacted with cyanamide to produce N-(dibenzyloxyphosphoryl)-cyanamide, in alkaline medium and at a temperature not higher than +5°C.

2. Process as claimed in claim 1, characterized in that the reaction between said dibenzyloxyphosphoryl chloride and cyanamide is carried out in mixtures of solvents or in immiscible solvents, wherein dibenzyloxyphosphoryl chloride and cyanamide are respectively soluble.

3. Process as claimed in claim 1, characterized in that the process is carried out within the same reaction medium, without isolating intermediates.

4. Process for the preparation of guanidino-derivatives, characterized in that N-(dibenzyloxyphosphoryl)-cyanamide is firstly prepared by means of the process as claimed in one or more preceding claims and then it is reacted with substances bearing a primary or secondary amine function.

5. Process for preparing phosphagen compounds of general formula

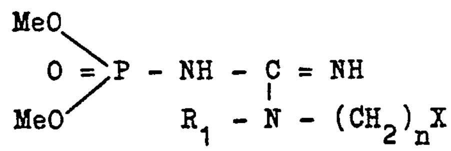

(IX)

wherein:

| $R_1$ | n | X |
|---|---|---|
| $CH_3$ | 1 | —COOH |
| H | 3 | $—CH(NH_2)COOH$ |
| H | 2 | $—SO_3H$ |
| H | 1 | —COOH |
| H | 2 | $—OPO(OH)OCH_2CH(NH_2)COOH$ |
| $CH_3$ | 2 | —OH |

and Me = H or a metal forming a physiologically acceptable salt, and the intramolecular condensation products between said group X and said group =NH, such as phosphoryl-creatinine disodium salt of formula

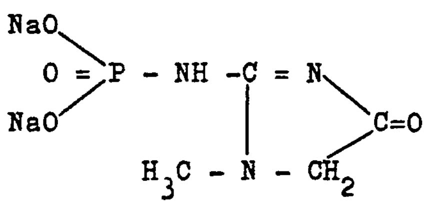

characterized in that as a previous stage in the process a substituted or unsubstituted N-(dibenzyloxyphosphoryl)-cyanamide is prepared according to the process as claimed in one or more preceding claims.

**Patentansprüche**

1. Verfahren zur Herstellung eines substituierten oder unsubstituierten N-(Dibenzyloxyphosphoryl)-cyanamide, welches als Zwischenprodukt in der Synthese von Phosphagenverbindungen, wie Phosphocreatin, Phosphocreatinin und ähnlichen Verbindungen, verwendbar ist, dadurch gekennzeichnet, daß das entsprechende Dibenzyloxyphosphorylchlorid mit Cyanamid in einem alkalischen Medium, bei einer Temperatur, welche nicht höher als +5°C ist, zu N-(Dibenzyloxyphosphoryl)-cyanamid umgesetzt wird.

2. Verfahren nach Anspruch 1, dadurch gekennzeichnet, daß die Reaktion zwischen dem Dibenzyloxyphosphorylchlorid und Cyanamid in Lösungsmittelgemischen oder in miteinander nicht mischbaren Lösungsmitteln, worin jeweils entweder Dibenzyloxyphosphorylchlorid oder Cyanamid löslich ist, durchgeführt wird.

3. Verfahren nach Anspruch 1, dadurch gekennzeichnet, daß das Verfahren in dem selben Reaktionsmedium, ohne Isolieren der Zwischenprodukte durchgeführt wird.

4. Verfahren zur Herstellung von Guanidinoderivaten, dadurch gekennzeichnet, daß das N-(Dibenzyloxyphosphoryl)-cyanamid zuerst nach dem Verfahren von einem oder mehreren der vorhergehenden Ansprüche hergestellt wird und daß es dann mit Substanzen, welche eine primäre oder sekundäre Aminfunktion tragen, umgesetzt wird.

5. Verfahren zur Herstellung von Phosphagenverbindungen der allgemeinen Formel

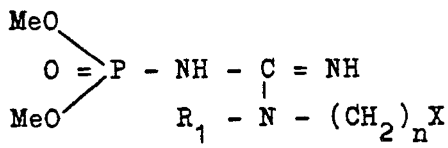

(IX)

worin

| $R_1$ | n | X |
|---|---|---|
| $CH_3$ | 1 | $—COOH$ |
| H | 3 | $—CH(NH_2)COOH$ |
| H | 2 | $—SO_3H$ |
| H | 1 | $—COOH$ |
| H | 2 | $—OPO(OH)OCH_2CH(NH_2)COOH$ |
| $CH_3$ | 2 | $—OH$ |

und Me = H oder ein Metall bedeuten, welche ein physiologisch verträgliches Salz bilden und die intramolekularen Kondensationsprodukte zwischen der Gruppe X und der Gruppe =NH, wie beispielsweise das Phosphoryl-creatinindinatriumsalz der Formel

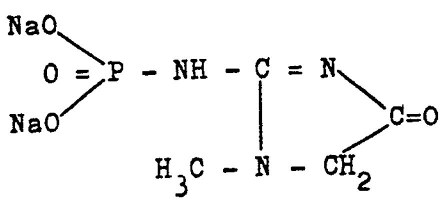

dadurch gekennzeichnet, daß als ein vorhergehender Schritt in dem Verfahren ein substituiertes oder unsubstituiertes N-(Dibenzyloxyphosphoryl)-cyanamid nach dem Verfahren nach einem oder mehreren der vorhergehenden Ansprüchen hergestellt wird.

**Revendications**

1. Procédé pour la préparation d'une N-(dibenzyloxyphosphoryl)-cyanamide substituée ou non substituée, utile comme intermédiaire dans la synthèse de composés phosphagènes tels que la phosphocréatine, la phosphocréatinine et des composés similaires, caractérisé en ce qu'on fait réagir le chlorure de dibenzyloxyphosphoryl correspondant avec de la cyanamide pour produire de la N-(dibenzyloxyphosphoryl)-cyanamide, en milieu alcalin et à une température non supérieure à +5°C.

2. Procédé selon la revendication 1, caractérisé en ce que la réaction entre ce chlorure de dibenzyloxyphosphoryl et ce cyanamide est mise en oeuvre dans des mélanges de solvants ou dans des solvants non miscibles, dans lesquels le chlorure de dibenzyloxyphosphoryl et le cyanamide sont respectivement solubles.

3. Procédé selon la revendication 1, caractérisé en ce que le procédé est mis en oeuvre dans le même milieu réactionnel, sans intermédiaires isolés.

4. Procédé de préparation de dérivés guanidiques, caractérisé en ce que le N-(dibenzyloxyphosphoryl)-cyanamide est en premier lieu préparé au moyen du procédé tel que revendiqué dans une ou plusieurs des revendications précédentes, et ensuite on le fait réagir avec des substances comportant une fonction amine primaire ou secondaire.

5. Procédé pour préparer des composés phosphagènes de formule générale:

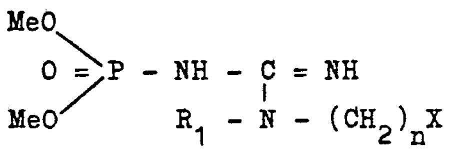

(IX)

dans lesquels:

| $R_1$ | n | X |
|---|---|---|
| $CH_3$ | 1 | $-COOH$ |
| H | 3 | $-CH(NH_2)COOH$ |
| H | 2 | $-SO_3H$ |
| H | 1 | $-COOH$ |
| H | 2 | $-OPO(OH)OCH_2CH(NH_2)COOH$ |
| $CH_3$ | 2 | $-OH$ |

et Me = H ou un métal formant un sel physiologiquement acceptable, et les produits de condensation intramoléculaire entre ce groupement X et ce groupement NH, tel qu'un sel disodique de phosphorylcréatinine de formule

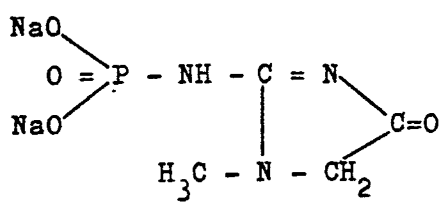

caractérisé en ce que comme étape préliminaire dans le procédé on prépare un N-(dibenzyloxyphosphoryl)-cyanamide conformément au procédé tel que revendiqué dans une ou plusieurs des revendications précédentes.